# DEMANDE DE BREVET EUROPEEN

(11) **EP 3 643 162 A1**
(43) Date de publication de la demande: **29.04.2020**
(21) Numéro de dépôt: 19204981.5
(22) Date de dépôt: 24.10.2019
(51) Int. Cl.: A01G 27/04

(54) **MECHE D'IRRIGATION POUR PLANTES**

(30) Priorité: 26.10.2018 FR 1859949
(71) Demandeur: Aqua Essentia, 14790 Verson (FR)
(72) Inventeur: L'HIRONDEL, Christian, 14790 Verson (FR)
(74) Mandataire: Cabinet Le Guen Maillet

(57) **Abrégé**

La présente invention se rapporte à une mèche d'irrigation (100) destinée à être interposée entre un volume de liquide contenant essentiellement de l'eau (O) et le réseau racinaire d'une plante (P) pour l'irriguer.

Selon l'invention, la mèche d'irrigation (100) comprend une bande de matière (Bm) fabriquée en microfibres à partir d'un mélange de microfibres textiles comprenant du polyester et du polyamide.

Cette combinaison de microfibres incluant ces matières permet de faire remonter, notamment par capillarité, une quantité d'eau dans la bande de matière, jusqu'à une hauteur atteignant au moins 28 cm, hauteur mesurée depuis la surface de l'eau.

La mèche de l'invention peut alors puiser de l'eau, par exemple stockée dans un conteneur, un récipient, pour la transporter vers les racines d'une plante.

## Description

La présente invention concerne une mèche d'irrigation destinée à transporter de l'eau, par exemple contenue dans une réserve, jusqu'au réseau racinaire d'une plante pour l'irriguer.

Les plantes cultivées hors-sol, par exemple dans un contenant rempli de terreau, tel qu'une jardinière, un bac ou un pot, nécessitent des soins réguliers. Il faut notamment les arroser régulièrement et parfois tous les jours, pour qu'elles puissent vivre et se développer.

Quand une plante vient d'être arrosée, l'on constate qu'une proportion de cette eau s'évapore du terreau par sa surface en contact avec l'air ambiant. Pour limiter cette évaporation, une solution connue consiste à recouvrir la surface du substrat exposée à l'air, par des graviers, de petites pierres. Ce recouvrement abaisse cependant la teneur en oxygène du substrat ce qui finit par fragiliser la plante.

Il est également connu d'utiliser un pot de forme évasée et qui est fabriqué en terre ou en argile. La forme évasée du pot favorise l'oxygénation d'un substrat tel que de la terre ou du terreau et par conséquent l'oxygénation des racines de la plante qu'il contient pour qu'elles puissent prélever l'eau et les minéraux contenus dans le substrat. La porosité du pot évite également toute stagnation d'eau préjudiciable aux racines. Enfin, la porosité du pot lui-même favorise la répartition de l'eau sur au moins une partie de la hauteur du substrat. Ce type de pot convient assez bien pour irriguer une plante mais nécessite néanmoins des arrosages réguliers et adaptés.

Il est aussi connu d'utiliser un contenant pourvu d'un fond percé. L'on fait bassiner périodiquement ce contenant dans de l'eau pour baigner la plante. Il faut la laisser peu de temps car il existe un risque de saturation capillaire qui provoque le pourrissement des racines. S'agissant d'un contenant relativement haut, l'eau ne parvient pas à s'infiltrer plus haut qu'une hauteur de quelques centimètres et seules les racines basses sont alors irriguées.

On peut encore placer un tel pot sur un tapis hydrophile qu'il convient d'humidifier régulièrement si l'on veut s'affranchir des opérations de bassinage. Il faut cependant contrôler cette humidification pour éviter la saturation capillaire des racines et leur pourrissement.

Dans le métier de l'horticulture on utilise, des tables de marée dans lesquelles l'on fait monter, puis descendre le niveau de l'eau dans lequel baignent les pots contenant les plantes, des tables à bascule dans lesquelles on fait passer de l'eau dans un sens puis dans l'autre. Ces appareils sont relativement coûteux et astreignants à l'usage.

On connaît aussi une invention réalisée par M. Pieter HOFF baptisée WATERBOXX et qui consiste en un réservoir d'eau pratiquement cylindrique fabriqué en plastique d'un rayon de 48 cm et d'une hauteur de 23 cm et présentant en son centre une structure tubulaire assez large pour recevoir deux ou trois plantes. Le réservoir possède un couvercle crénelé incliné vers le centre, où est située la structure tubulaire. Le réservoir est rempli d'eau. Le couvercle crénelé est destiné à collecter les eaux de condensation et les eaux pluviales pour les acheminer vers l'ouverture tubulaire centrale pour ensuite remplir le réservoir d'eau au travers des petits tuyaux.

Au fond du réservoir d'eau se trouve une mèche synthétique torsadée qui traverse la paroi de fond du réservoir et dont le but est de délivrer en permanence de petites quantités d'eau dans le sol.

Les résultats sont spectaculaires mais parfois inconstants avec des plantes à croissance rapide et d'autres qui restent chétives.

On connaît encore à la lecture du document US-A-6 115 959, un outil d'insertion de mèche qui peut être réutilisé de pot en pot, éliminant ainsi le besoin de plus d'un outil d'insertion par plante en pot.

La mèche doit être insérée dans le sol d'une plante en pot à l'aide de l'outil d'insertion.

L'outil d'insertion se compose d'une tige mince et allongée dont l'extrémité extérieure présente une pointe aiguisée et une entaille dans la paroi latérale de l'outil.

La mèche est constituée d'une ficelle fabriquée en nylon. La mèche de ficelle est cuite à une température élevée (entre 93 degrés C° et 163 degrés C°) pendant une durée comprise entre 3 et 7 heures. La cuisson au four empêche la ficelle de se défaire de la mèche.

Généralement, il y a une masse de fibres telle que vingt à trente fibres entrent dans la constitution de chaque mèche. Ces fibres sont torsadées de sorte que la mèche prend la forme d'une ficelle ou d'un fil. Un mélange de polyester pour la mèche donne des résultats satisfaisants. Cependant, le nylon semble être absolument le meilleur matériau pour déplacer le plus d'eau depuis la chambre interne d'un réservoir, jusque dans le sol d'un pot déposé au-dessus du réservoir. Le coton, le jute et la senne ne sont pas appropriés lorsqu'ils sont utilisés comme mèche.

La cuisson de la mèche permet de souder les différents brins des fibres les uns aux autres et de préserver ainsi l'intégrité de ladite mèche. Un diamètre typique de la mèche est compris entre 1.58 mm et 3.17 mm. Une mèche numéro dix-huit s'est avérée préférable pour les pots de petite taille dont le diamètre est compris entre 100 mm et 200 mm. Une mèche numéro vingt-quatre est souhaitable pour les pots de plus grande taille, dont le diamètre est de 250 mm et plus.

Connaissant cet état de l'art dans le domaine de l'arrosage, de l'irrigation des plantes, le demandeur de la présente invention a cherché une solution pour, d'une part, espacer l'intervalle d'apport d'eau à une plante et, d'autre part, lui procurer un apport d'eau nécessaire et suffisant. Le demandeur a également souhaité rechercher une solution simple et économique.

A cet effet, est proposée une mèche d'irrigation destinée à être interposée entre un volume de liquide contenant essentiellement de l'eau et le réseau racinaire d'une plante pour l'irriguer ; selon l'invention, la mèche d'irrigation comprend une bande de matière fabriquée en microfibres à partir d'un mélange de microfibres textiles comprenant du polyester et du polyamide.

Cette combinaison de microfibres incluant ces matières permet de faire remonter, notamment par capillarité, une quantité d'eau dans la bande de matière, jusqu'à une hauteur atteignant au moins 28 cm, hauteur mesurée depuis la surface de l'eau.

La mèche de l'invention peut alors puiser de l'eau, par exemple stockée dans un conteneur, un récipient, pour la transporter vers les racines d'une plante.

Selon une caractéristique additionnelle de l'invention, les microfibres comprennent du polyester dans une proportion en masse d'au moins 80 % et du polyamide dans une proportion en masse d'au moins 9 %.

L'ascension capillaire est augmentée en utilisant cette proportion.

Selon une caractéristique additionnelle de l'invention, la densité de la bande de matière est inférieure ou égale à 250 grammes par litre de microfibres.

L'ascension capillaire est encore augmentée en utilisant cette densité de microfibres.

Selon une caractéristique additionnelle de l'invention, les microfibres sont lisses ou suédées.

Ces caractéristiques spatiales augmentent encore l'ascension capillaire dans la mèche d'irrigation et qui peut atteindre 49 cm en 24 heures.

Selon une caractéristique additionnelle de l'invention, la mèche d'irrigation est entourée d'un manchon fabriqué dans un matériau étanche.

La présence de ce manchon est en mesure de limiter l'évaporation dans la partie aérienne de la mèche d'irrigation.

Selon une caractéristique additionnelle de l'invention, la mèche d'irrigation est constituée d'une première partie de mèche et d'une seconde partie de mèche physiquement distinctes et destinées à être mise en contact mutuellement pour activer le fonctionnement de la mèche.

On trempe une partie de mèche dans de l'eau et l'on enfouit l'autre partie de mèche dans le voisinage du réseau racinaire d'une plante.

Un ensemble comprenant une mèche d'irrigation et un moyen de mise en place de la mèche dans un pot contenant un substrat dans lequel sont présentes les racines de la plante, fait également partie de l'invention. Le moyen de mise en place inclut une tige longiligne relativement rigide et formant une aiguille de plusieurs décimètres de long.

On solidarise mèche et aiguille, puis on transfixe le pot et le substrat de telle manière que la mèche puisse irriguer le substrat de culture sur toute sa hauteur. En cas de présence de plantes, la mèche sera de préférence placée au voisinage du réseau racinaire de la plante.

On peut encore enfoncer la mèche dans le substrat d'une jardinière en longeant le réseau racinaire des plantes qu'elle contient.

Avantageusement, une extrémité de l'aiguille porte un moyen de jonction conçu pour fixer une extrémité de la mèche d'irrigation.

On utilise le moyen de jonction pour solidariser la mèche d'irrigation avec l'aiguille.

Avantageusement, ladite extrémité de l'aiguille est conformée en boucle ouverte.

L'aiguille est relativement simple à fabriquer en utilisant, par exemple, un fil de fer.

Cet ensemble, comprenant une mèche d'irrigation et un moyen de mise en place de la mèche dans un pot, peut dans l'invention, être associé à un conteneur ou un récipient incluant un volume de stockage pour un liquide.

Une extrémité de la mèche est trempée dans le liquide tel que de l'eau et l'autre extrémité de la mèche est implantée dans le réseau racinaire d'une plante. La mèche peut ainsi irriguer en continu la plante. Cette technique d'irrigation est beaucoup moins contraignante que l'arrosage traditionnel.

Avantageusement, le conteneur est défini par une paroi de fond, une ouverture tournée à l'opposé de la paroi de fond et ledit conteneur comprend un couvercle dimensionné pour fermer ladite ouverture, le couvercle étant traversé d'un orifice dimensionné pour faire passer la mèche d'irrigation.

Le pot peut reposer par sa paroi de fond sur le couvercle à l'issue de l'installation de la mèche d'irrigation.

En variante de réalisation, le conteneur est défini par une paroi de fond, une ouverture de remplissage tournée à l'opposé de la paroi de fond et dimensionnée également pour réceptionner un pot et la hauteur dudit conteneur est supérieure à celle d'un pot qui est censé accueillir.

On enfile la mèche d'irrigation dans le pot contenant la plante et l'on dépose le pot dans le conteneur.

En variante de réalisation, le récipient est défini par une paroi de fond, une ouverture de remplissage, une paroi de pourtour, un passage traversant la paroi de pourtour et dans la partie haute de celle-ci en considérant la position d'utilisation dudit récipient.

On enfile la mèche dans le passage avec une partie qui occupe toute la hauteur du récipient et une partie qui se dirige vers le sol ou la jardinière.

Un réseau d'irrigation destiné à alimenter en eau au moins un conteneur, un récipient, fait aussi partie de l'invention. Le réseau d'irrigation comprend une nourrice dimensionnée pour contenir un volume relativement important d'eau, au moins une réserve intermédiaire équipée d'un dispositif de contrôle du niveau d'eau dans celle-ci et raccordée, d'une part, à ladite nourrice et, d'autre part, audit conteneur et/ou audit récipient.

L'irrigation des plantes est réalisée automatiquement et sans utiliser de source d'énergie.

Un procédé de fabrication d'une mèche d'irrigation destinée à être interposée entre un volume de liquide contenant essentiellement de l'eau et le réseau racinaire d'une plante pour l'irriguer, fait aussi partie de l'invention. Le procédé consiste à sélectionner des microfibres à partir d'un mélange de microfibres textiles comprenant des microfibres de polyester et des microfibres de polyamide et de les arranger pour fabriquer une bande de matière constituant la mèche d'irrigation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue d'une mèche d'irrigation pour plantes selon l'invention,
la Fig. 2 représente une vue de face d'un récipient contenant de l'eau et dans lequel trempe une extrémité d'une mèche d'irrigation et dont l'autre extrémité s'étend vers le haut selon l'invention,
la Fig. 3 représente une vue de face d'un pot contenant un substrat et une plante et qui est posé sur un conteneur contenant de l'eau et qui est équipé d'une mèche d'irrigation selon l'invention,
la Fig. 4 représente une vue de face d'un pot contenant un substrat et une plante et qui est disposé dans un conteneur contenant de l'eau et qui est équipé d'une mèche d'irrigation selon l'invention,
la Fig. 5 représente une vue de face d'un récipient contenant de l'eau et dans lequel trempe une extrémité d'une mèche d'irrigation et dont l'autre extrémité s'étend vers le bas et en étant enterrée dans un substrat contenu dans un pot et dans lequel est plantée une plante selon l'invention,
la Fig. 6 représente une vue de face d'un récipient contenant de l'eau et dans lequel trempe une extrémité d'une mèche d'irrigation et dont l'autre extrémité s'étend latéralement et en étant enterrée dans un substrat contenu dans un pot et dans lequel sont plantées plusieurs plantes selon l'invention,
la Fig. 7 représente une vue latérale montrant un réseau d'irrigation de deux conteneurs, et d'un récipient disposés sur un même niveau, équipés de mèches d'irrigation et qui sont raccordés en série à une réserve intermédiaire raccordée à une nourrice remplie d'eau selon l'invention,
la Fig. 8 représente un schéma d'un réseau d'irrigation d'une pluralité de conteneurs, et de récipients, équipés de mèches d'irrigation et qui sont raccordés à une réserve intermédiaire raccordée à une nourrice remplie d'eau selon l'invention,
la Fig. 9 représente une vue latérale montrant un réseau d'irrigation de deux conteneurs, et d'un récipient disposés sur des niveaux différents, équipés de mèches d'irrigation et qui sont respectivement raccordés à des réserves intermédiaires raccordées en parallèle à une nourrice remplie d'eau selon l'invention,
la Fig. 10 représente un schéma d'un réseau d'irrigation d'une pluralité de conteneurs, et de récipients, équipés de mèches d'irrigation et qui sont raccordés à plusieurs réserves intermédiaires raccordées en parallèle à une nourrice remplie d'eau selon l'invention,
la Fig. 11 représente une vue de face d'un pot contenant un substrat et une plante et qui est disposé en étant surélevé au-dessus d'un conteneur rempli d'eau, le contenant incluant une première partie de mèche, le pot incluant une seconde partie de mèche selon l'invention et,
la Fig. 12 représente une vue de face d'un pot contenant un substrat et une plante et qui est posé sur un conteneur rempli d'eau, les deux parties de mèches étant en contact mutuel selon l'invention.

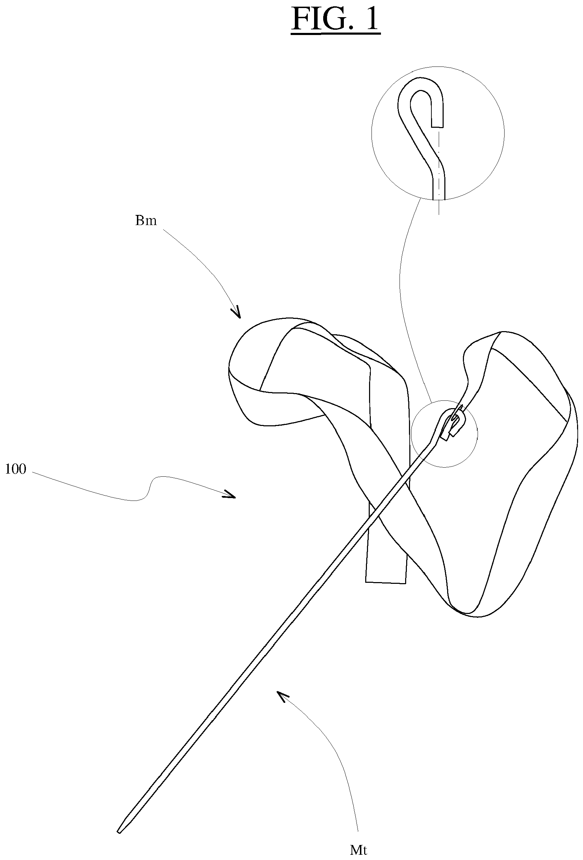

La mèche d'irrigation 100 présentée sur la Fig. 1, est destinée à permettre le transfert d'un liquide contenu, par exemple, dans un réservoir, vers le système racinaire d'une plante. Elle se compose d'une bande de matière Bm utilisant des microfibres aux propriétés bien particulières. La bande de matière Bm est avantageusement associée à un moyen de mise en place Mt pour faciliter la pose de la mèche 100 dans un pot contenant un substrat dans lequel les racines de la plante sont enveloppées.

Rappelons que les microfibres sont des microfibres de textiles dont la masse linéique est inférieure à un décitex. Le décitex indique la masse d'un gramme de dix mil mètres de fil constitutifs de la microfibre, ce qui correspond à un diamètre de fil inférieur à neuf micromètres.

Le moyen mis en place Mt est constitué sur cette Fig. 1, d'une tige longiligne relativement rigide et formant une aiguille de plusieurs décimètres de long. Une première extrémité de l'aiguille est fixée, de manière amovible et par l'intermédiaire d'un moyen de jonction, à une extrémité de la bande de matière Bm. L'autre extrémité de la tige longiligne sert à enfiler la bande de matière Bm dans le pot et préférablement dans le voisinage des racines de la plante.

Sur cette Fig. 1, la première extrémité de l'aiguille est conformée en forme de boucle ouverte de sorte à ce qu'elle puisse être accrochée, au travers d'une extrémité de la bande de matière Bm, par percement. L'aiguille est ainsi en mesure de tirer sur ladite bande de matière. Sur la vue de détail, la partie terminale de la boucle est disposée en retrait du corps principal de la tige longiligne pour faciliter la mise en place de l'aiguille dans le substrat et pour éviter que la boucle abîme les racines de la plante.

La bande de matière Bm est découpée dans un textile qui inclut des microfibres comprenant du polyester et du polyamide. Sachant que le polyamide est une matière hydrophile et que le polyester est une matière hydrophobe, le mélange de ces deux matières procure, de manière inattendue, des performances étonnantes.

La largeur de la bande de matière Bm est comprise entre quelques millimètres et quelques centimètres. Son épaisseur peut atteindre 20 millimètres.

Les microfibres sont obtenues par un assemblage de fils dont des fils de polyester et des fils de polyamide.

Dans l'invention, la masse linéique des microfibres est préférentiellement inférieure à 1 décitex et préférentiellement égale ou voisine de 0.15 décitex.

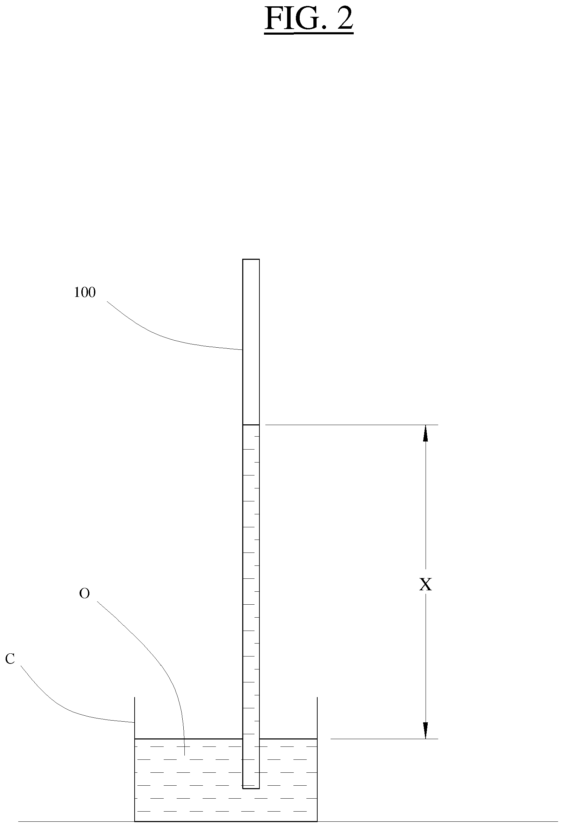

La recherche relativement longue de cette qualité de microfibres a permis d'obtenir les performances suivantes. En référence à la Fig. 2, la mèche d'irrigation 100 de l'invention, trempée par une extrémité dans un récipient C contenant de l'eau et dont l'autre extrémité est dirigée verticalement vers le haut, est capable de faire remonter une quantité d'eau dans la bande de matière qui la constitue, jusqu'à une hauteur X atteignant au moins 28 cm, hauteur mesurée depuis la surface de l'eau O, à l'issue d'une période de 24 H. L'ascension capillaire est mesurée à température ambiante, par exemple à 20 C° et à une pression atmosphérique normale, par exemple, une pression que l'on trouve habituellement au niveau de la mer.

La recherche a également abouti aux sélections suivantes qui permettent d'accroître encore les performances de la mèche d'irrigation de l'invention :
La masse de polyester est présente à hauteur d'au moins 80 % alors que la masse de polyamide est présente à hauteur d'au moins 9 %.

La densité de la microfibre est inférieure ou égale à 250 grammes par litre de microfibres. On réalise cette mesure en appliquant une pression de 100 Pa sur un échantillon dont l'épaisseur est de 1 mm avant l'application de cette pression.

Les microfibres ont préférentiellement subi un traitement de suédage ou de lissage des microfibres.

La combinaison de ces trois caractéristiques permet ainsi d'augmenter la valeur de X et qui atteint 49 cm. Un récipient d'une hauteur d'environ 40 cm, de la taille d'un seau, par exemple, permet de stocker un volume d'eau suffisamment important pour irriguer plusieurs plantes d'intérieur pendant au moins un mois.

Les lois physiques qui peuvent expliquer ce phénomène sont les suivantes :
- Loi de Darcy : Elle exprime le débit d'un fluide incompressible filtrant au travers d'un milieu poreux supposé isotrope à l'échelle de travail. La circulation de ce fluide entre deux points est déterminée par la conductivité hydraulique ou le coefficient de perméabilité du substrat et par le gradient de pression du fluide
- La capillarité est le phénomène d'interaction qui se produit aux interfaces entre deux liquides non miscibles, entre un liquide et l'air ou entre un liquide et une surface. Elle est due aux forces de tension superficielle entre les différentes phases en présence. Elle est mise en oeuvre lorsque les buvards aspirent l'encre, les éponges s'imbibent d'eau, ou quand on trempe une partie de son morceau de sucre dans son café et que ce sucre devient tout noir.
- La porosité est l'ensemble des vides (pores) d'un matériau solide, ces vides sont remplis par des fluides (liquide ou gaz). C'est une grandeur physique exprimée entre 0 et 1 ou en pourcentage entre 0 et 100%, qui conditionne les capacités d'écoulement et de rétention d'un substrat. La porosité est aussi une valeur numérique.
- La conductivité hydraulique, généralement notée K, est une grandeur qui exprime l'aptitude d'un milieu poreux à laisser passer un fluide sous l'effet d'un gradient de pression 1.

Dans le système international d'unités S.I., elle s'exprime en mètres par seconde (m/s).
- Enfin la dispersion hydrodynamique dans un milieu poreux est le processus par lequel la concentration en soluté non réactif d'un fluide diminue avec la distance de transport.

Cette faculté de pouvoir transporter un liquide, sur une relativement grande distance, est utilisée dans la mèche d'irrigation 100 de l'invention, pour transporter de l'eau, contenant ou non un nutriment, dans le réseau racinaire d'une plante cultivée dans une jardinière, un bac, un pot et de manière générale tout type de contenant pouvant l'accueillir.

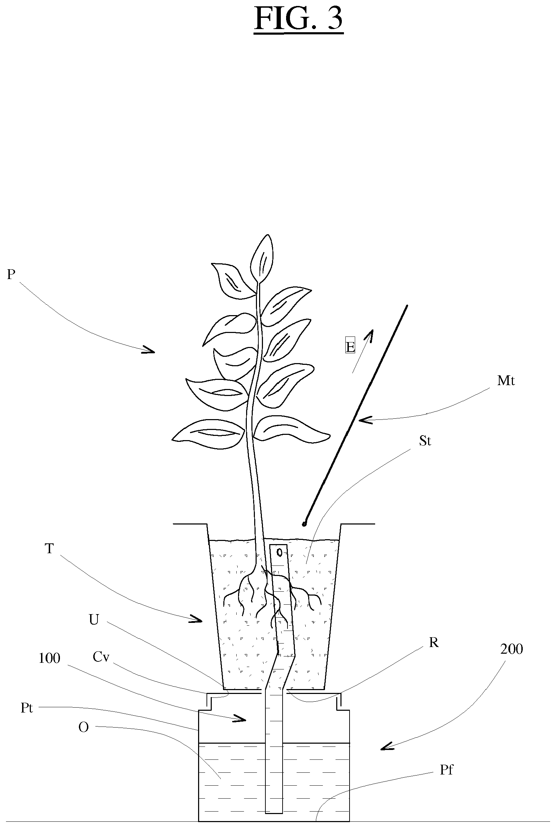

Sur la Fig. 3 sont présentés, un pot T contenant de la terre, un terreau ou de manière générale, un substrat St conçu pour subvenir aux besoins d'une plante, une telle plante P plantée dans le substrat, ainsi qu'un conteneur 200 dans lequel est installée une mèche d'irrigation 100. La longueur de la mèche tient compte de la hauteur du pot T et de la hauteur du conteneur 200 ; la somme de ces deux hauteurs ne devant pas dépasser 49 cm afin d'obtenir une hydratation optimale.

Le conteneur 200 présente la forme d'un contenant défini par une paroi de fond Pf prolongée par une ou plusieurs paroi(s) de pourtour Pt et qui délimite(nt), du côté opposé à la paroi de fond, une ouverture de remplissage U qui est ici fermée par un couvercle Cv percé d'un orifice dimensionné pour faire passer la mèche d'irrigation 100.

Le conteneur 200 est conçu pour contenir de l'eau O destinée à être consommée par la plante P.

La paroi de pourtour Pt présente, sur cette Fig. 3, la géométrie d'un cylindre.

La paroi de fond du pot T est percée d'un trou R conçu, de manière connue, pour évacuer par le dessous, l'excédent d'eau absorbé dans le substrat, par exemple à l'issue d'un arrosage abondant de la plante P et qui peut alors s'écouler au travers de l'orifice du couvercle Cv pour tomber dans le conteneur 200.

Sur cette Fig. 3, le pot T est formé de manière connue d'une paroi conique évasée vers le haut.

Cette configuration convient, notamment, pour un particulier qui souhaite s'absenter quelques jours de son habitation sans se soucier de l'arrosage de ses plantes d'intérieur.

A titre d'exemple, un conteneur 200 d'une capacité de 1,6 litres procure une autonomie d'un mois pour une plante consommant 50 ml/jour.

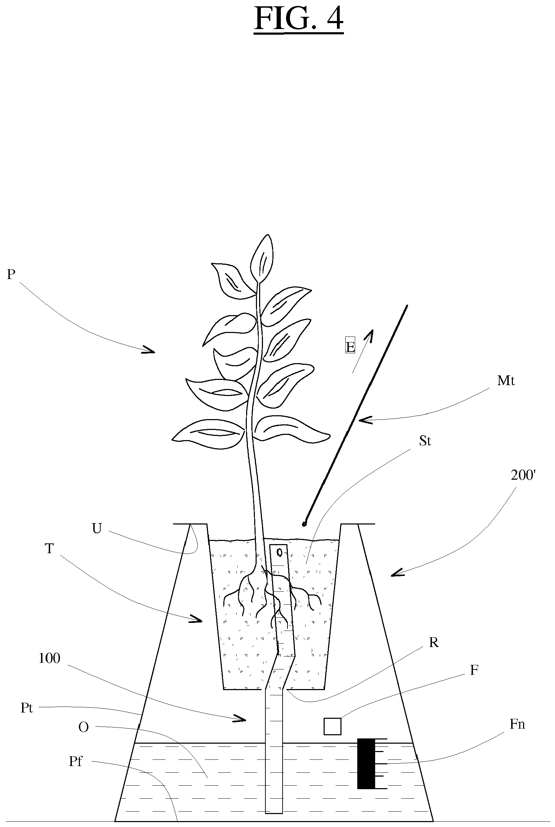

Sur la Fig. 4, sont présentés, un pot T contenant de la terre, un terreau ou de manière générale, un substrat St conçu pour subvenir aux besoins d'une plante, une telle plante P plantée dans le substrat, ainsi qu'un conteneur 200' adapté pour supporter le pot T, et dans lequel est installée une mèche d'irrigation 100. La hauteur de mèche est, préférentiellement, inférieure à 50 cm, pour les raisons exposées ci-avant.

Cette configuration convient, notamment, pour être commercialisée dans les jardineries.

Le conteneur 200' présente la forme d'un contenant défini par une paroi de fond Pf prolongée par une ou plusieurs paroi(s) de pourtour Pt et qui délimite(nt), du côté opposé à la paroi de fond, une ouverture U de remplissage et dimensionnée également pour réceptionner le pot T.

La partie basse du conteneur 200' est conçue pour contenir de l'eau O destinée à être consommée par la plante P.

La paroi de pourtour Pt présente, sur cette Fig. 4, la géométrie d'un tronc de cône dont la grande base est tournée vers le bas, dans la position d'utilisation dudit conteneur 200', pour fournir un volume de stockage relativement important. La hauteur du conteneur 200' est plus grande que la hauteur du pot T qu'il peut accueillir.

Le pot T est tenu dans le conteneur 200' de telle manière qu'au niveau maximum d'eau susceptible d'être stockée dans le conteneur, l'eau n'atteint pas la paroi de fond du pot T, comme cela apparaît sur cette Fig. 4. La paroi de pourtour Pt est traversée, à cet effet, d'une fenêtre Fn transparente et graduée formant un niveau à eau, permettant à un utilisateur de vérifier que la quantité d'eau O contenue dans le conteneur 200' reposant à plat par sa paroi de fond Pf, ne dépasse pas certaines limites. La paroi de pourtour Pt peut encore être traversée par un orifice F formant un trop plein et qui peut servir également d'orifice de remplissage.

La paroi de fond du pot T est percée d'un trou R conçu, de manière connue, pour évacuer par le dessous, l'excédent d'eau absorbé dans le substrat, par exemple à l'issue d'un arrosage abondant de la plante P et qui peut alors s'écouler directement dans le conteneur 200'.

Sur cette Fig. 4, le pot T est formé de manière connue d'une paroi conique évasée vers le haut. Le bord haut du pot T est tenu dans l'ouverture U.

Dans une variante de réalisation, non représentée, le conteneur est pourvu d'une paroi intermédiaire transversale disposée de manière pratiquement horizontale dans la position d'utilisation du conteneur 200' et qui est percée pour permettre le passage de la mèche d'irrigation 100 et sur laquelle peut reposer le pot T par sa paroi de fond.

Cette technique d'irrigation d'une plante présentée sur les Figs. 3 et 4, convient pour irriguer, du bas vers le haut, le réseau racinaire d'une plante et essentiellement par ascension capillaire.

Le fonctionnement de la mèche d'irrigation 100 et de son conteneur 200 ou 200', se présentent de la manière suivante. On utilise une mèche 100 fixée par une extrémité sur une aiguille Mt.

On enfile celle-ci dans le trou R d'un pot T contenant un substrat St enveloppant les racines d'une plante P, de sorte à transfixer avec une extrémité de la mèche 100, le substrat et ce, préférentiellement à proximité du réseau racinaire de ladite plante.

Dès que cette extrémité atteint ou est sur le point d'atteindre la surface visible du substrat, on détache l'aiguille Mt et on la retire comme le suggère la flèche E. On déverse de l'eau dans le conteneur 200 ou 200' et l'on dépose le pot T sur le conteneur 200 ou dans le conteneur 200' en prenant soin de faire tremper l'autre extrémité de la mèche 100 dans l'eau O.

L'amorçage de la mèche 100 démarre dès son trempage. Dès lors, l'eau O contenue dans le conteneur 200, 200' débute son ascension dans la mèche 100 jusqu'à s'élever à une hauteur pouvant atteindre 49 cm, distance mesurée depuis le niveau supérieur de l'eau contenue dans le conteneur 200, 200'. L'eau se diffuse ensuite dans le substrat St pour irriguer le réseau racinaire de la plante.

Il faut noter le comportement de la mèche d'irrigation 100 dans cette configuration. Le type de plante, la nature du substrat St, l'hygrométrie du substrat St liée à la consommation en eau de la plante, déterminent le débit d'eau transitant dans ladite mèche.

L'inventeur a en effet remarqué que le débit d'eau que transporte la mèche d'irrigation 100 change, notamment, suivant, le type de plante, l'exposition de la plante, la température ambiante, l'hygrométrie de l'air.

Le transfert d'eau est déterminé par la plante elle-même, qui consomme ce dont elle a besoin. Le fonctionnement de la mèche d'irrigation est auto-régulé.

A titre d'exemple, une azalée fleurie requiert 110 ml d'eau par jour alors qu'un petit pot de cyclamen ou de primevère se contentera de 30 ou 40 ml.

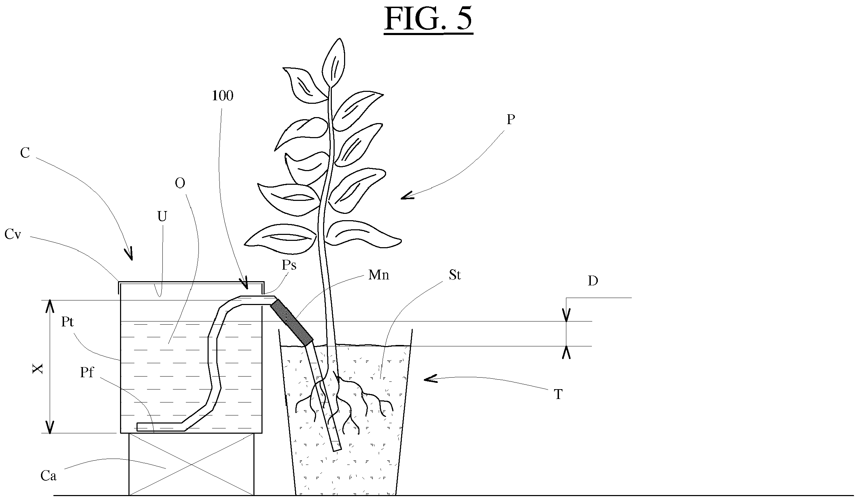

Dans un second mode opératoire présenté sur la Fig. 5, l'eau O destinée à irriguer la plante P transite au travers de la mèche 100, du bas vers le haut puis du haut vers le bas, entre un récipient C contenant de l'eau O et un pot T contenant un substrat St dans lequel le réseau racinaire d'une plante P puise ses besoins en eau et en nutriments. Le récipient se présente ici sous la forme d'un seau C dont l'ouverture U est fermée par un couvercle Cv.

Une extrémité de la mèche d'irrigation 100 a été enfilée dans le substrat St de sorte que ladite mèche puisse ressortir par le haut du pot T. L'autre extrémité de la mèche 100 est trempée dans l'eau O contenue dans le récipient C, la mèche d'irrigation pénétrant dans ledit récipient C au travers d'un passage Ps traversant sa paroi de pourtour Pt et dans la partie haute de celle-ci. Pour limiter l'évaporation de l'eau dans la partie aérienne de la mèche 100, cette partie aérienne peut être entourée localement d'un manchon Mn fabriqué dans un matériau étanche, tel qu'un film plastique. Ce manchon Mn présente une raideur suffisamment importante pour aider à la mise en place de la mèche dans le substrat St. Il faut noter que le manchon ne pénètre pas dans le récipient C ; il ferait alors office de siphon avec une vidange rapide du récipient. Si le manchon pénètre dans le récipient, il est alors perforé.

Dans ces conditions, la mèche d'irrigation 100 est capable de transférer un débit d'eau dans un pot T disposé en contre-bas du récipient C. L'eau est tout d'abord remontée essentiellement par capillarité, puis est transférée par gravité dans la partie descendante de la mèche 100.

La hauteur du récipient C doit être inférieure à la capacité d'ascension capillaire de la mèche utilisée. La hauteur maximale X est comprise entre 28 cm et 49 cm. Elle est fonction des caractéristiques de la microfibre utilisée.

On remarquera que pour vider complètement le récipient C, sa paroi de fond Pf doit être située au-dessus de l'extrémité de la mèche d'irrigation 100 qui est implantée dans le pot T. On peut, à cet effet, interposer une cale Ca entre le récipient C et le sol.

Dans ce mode opératoire, le débit maximum de l'eau transféré dans la mèche d'irrigation 100 est déterminé par la section de ladite mèche. Un autre critère qui influence le débit transporté dans la mèche 100 est la hauteur du dénivelé D existant entre la surface de l'eau O contenue dans le récipient C et la partie terminale de la mèche 100 (dénivelé hydrostatique). Plus le dénivelé est important, plus le débit est élevé et ce, jusqu'à l'obtention du débit maximum permis par la section de la microfibre. Il s'agit d'une application de la loi de Darcy.

A titre d'illustration, une mèche d'irrigation dont la section est de 10 mm² est capable de transporter de l'eau à un débit de 100 ml par jour. La mesure a été réalisée avec un dénivelé hydrostatique de 15 cm. Pour couvrir la majorité des besoins d'irrigation d'une plante d'intérieur, la section d'une mèche d'irrigation est préférentiellement comprise entre 25 et 50 mm². L'épaisseur de la mèche est dans un mode de fabrication avantageux de 1 mm.

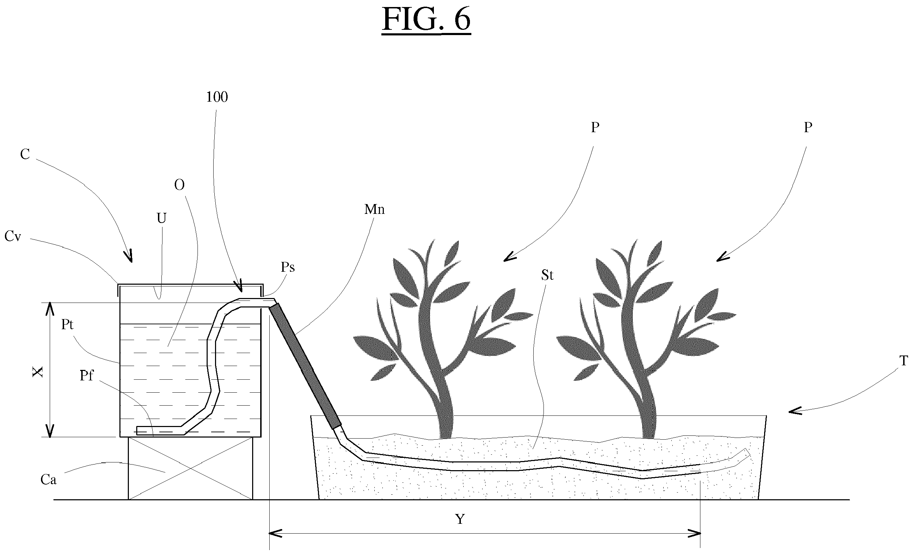

Dans un troisième mode opératoire présenté sur la Fig. 6, l'eau O destinée à irriguer la plante P transite au travers de la mèche 100, latéralement, entre un récipient C contenant de l'eau O et un pot T contenant un substrat St dans lequel le réseau racinaire d'une plante P puise ses besoins en eau et en nutriments. Le récipient se présente ici sous la forme d'un seau C. Le pot est ici une jardinière T.

Une extrémité de la mèche d'irrigation 100 a été enfoncée dans le substrat St sur pratiquement toute la longueur de la jardinière T de sorte que ladite mèche puisse pénétrer par l'ouverture de la jardinière T située à une extrémité de celle-ci et longer la jardinière. L'autre extrémité de la mèche 100 est trempée dans l'eau O contenue dans le récipient C, la mèche pénétrant dans ledit récipient C au travers d'un passage Ps traversant sa paroi de pourtour Pt et dans la partie haute de celle-ci. Pour limiter l'évaporation de l'eau dans la partie aérienne de la mèche 100, cette partie aérienne peut être entourée localement d'un manchon Mn fabriqué dans un matériau étanche, tel qu'un film plastique. Ce manchon Mn présente une raideur suffisamment importante pour aider à la mise en place de la mèche dans le substrat St.

Dans ces conditions, la mèche 100 est capable de transférer latéralement un débit d'eau dans la jardinière T disposée en contre-bas du récipient C. L'eau est transférée par gravité dans la partie descendante de la mèche 100.

La hauteur du récipient C doit être inférieure à la capacité d'ascension capillaire de la mèche utilisée. Cette hauteur maximale X est comprise entre 28 cm et 49 cm. Elle est fonction des caractéristiques de la microfibre utilisée.

La distance Y de transfert latéral peut atteindre la valeur de 158 cm, distance mesurée entre la ligne verticale de la mèche sortant de l'eau et la fin de la partie irriguée de la mèche enterrée. Cette distance de 158 cm a été mesurée à l'issue d'une durée de 24 H sur une mèche en position horizontale.

Ce mode opératoire permet facilement l'apport d'eau dans une jardinière T, comme cela apparaît sur cette Fig. 6, mais aussi vers des plantes cultivées en pleine terre. Pour irriguer ainsi plusieurs plantes en extérieur, la section de la mèche peut être supérieure à 50 mm². La longueur de la mèche peut atteindre 1,5 m, en position horizontale ; elle peut être supérieure en position inclinée.

On remarquera que pour vider complètement le récipient C, sa paroi de fond Pf doit être située au-dessus de la zone la plus basse de la mèche 100 qui est implantée dans la jardinière T. On peut, à cet effet, interposer une cale Ca entre le récipient C et le sol.

À titre d'exemple, un récipient C d'une capacité de 15 litres, et en mesure de procurer un débit quotidien de 1 litre à des plantes, pendant une durée de 15 jours.

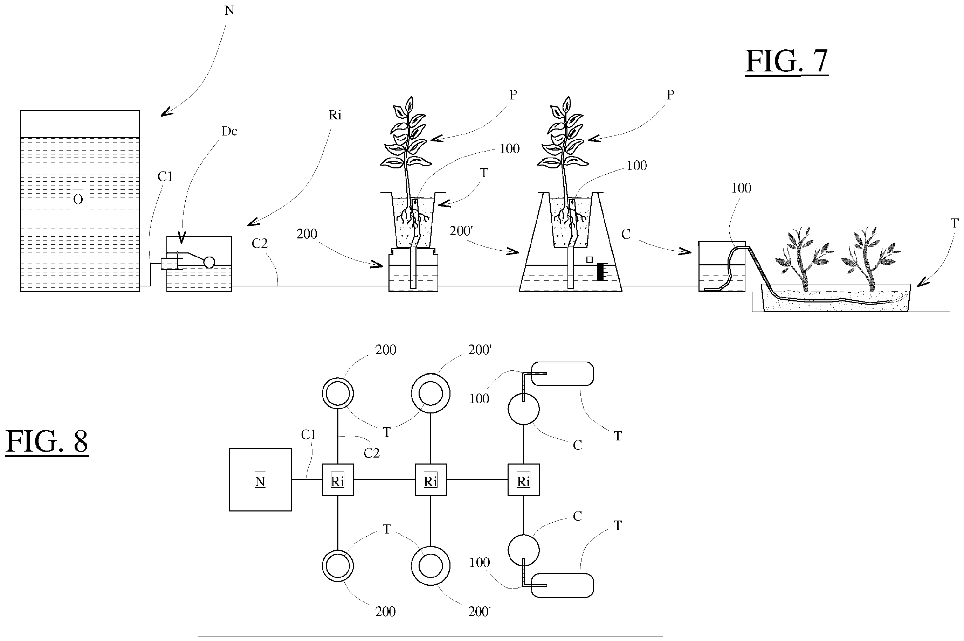

Sur les Figs. 7 et 8, sont présentés différents conteneurs 200, 200' et récipients C. Ils sont alimentés automatiquement en eau, par l'intermédiaire d'un réseau d'irrigation comprenant une nourrice N raccordée à au moins une réserve intermédiaire Ri équipée d'un dispositif de contrôle De du niveau d'eau dans celle-ci. Une seule réserve intermédiaire Ri est présentée sur la Fig. 7, alors que trois réserves intermédiaires Ri raccordées en série sont présentées sur la Fig. 8.

La nourrice N est dimensionnée pour contenir un volume relativement important d'eau O, par exemple de plusieurs centaines de litres d'eau. Elle est raccordée au niveau de sa partie basse à une première canalisation CI raccordée à la réserve intermédiaire Ri pour l'alimenter en eau. La réserve intermédiaire Ri est raccordée à au moins un conteneur 200, 200' ou un récipient C, par l'intermédiaire d'une seconde canalisation C2. Le dispositif de contrôle Dc comprend une vanne d'admission de l'eau dans la réserve intermédiaire Ri qui est attelée à un flotteur susceptible de fermer ladite vanne, dès qu'un seuil de niveau d'eau a été atteint dans la réserve intermédiaire Ri. L'eau contenue dans la réserve intermédiaire Ri s'écoule, par voie gravitaire, dans le conteneur 200, dans le conteneur 200' et dans le récipient C, équipés respectivement de leurs mèches d'irrigation 100. La nourrice remplie d'eau procure une irrigation automatique et précise des plantes.

En variante de réalisation, la nourrice N peut être remplacée par une canalisation d'alimentation d'eau.

Les conteneurs 200, 200' ainsi que le récipient C peuvent être raccordés en série à la réserve intermédiaire Ri (Fig. 7) ou être raccordés individuellement aux réserves intermédiaires (Fig. 8). Le niveau d'eau est commun dans les conteneurs 200, 200' ainsi que dans le récipient C. Ce raccordement convient pour irriguer des plantes sur un terrain plat ou sur un sol d'un même niveau, c'est-à-dire avec relativement peu de dénivelé.

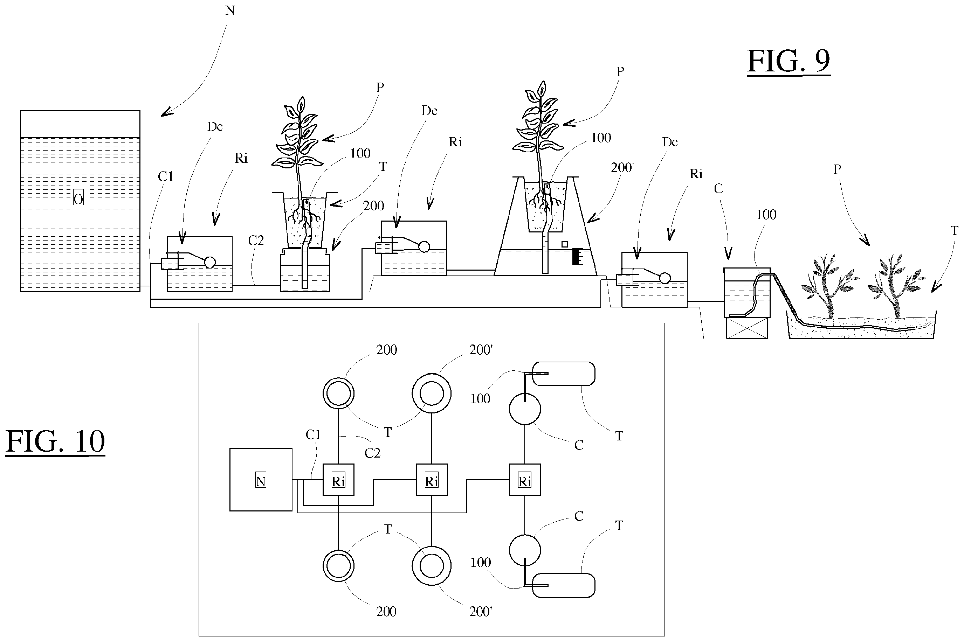

Sur les Figs. 9 et 10, le branchement du réseau d'irrigation diffère pour pouvoir irriguer des plantes P empotées dans des pots T situés sur des niveaux différents. Chaque réserve intermédiaire Ri irrigue au moins un conteneur 200, 200' ou au moins un récipient C, situé sur un niveau particulier. Les réserves intermédiaires Ri sont raccordées en parallèle à la nourrice N.

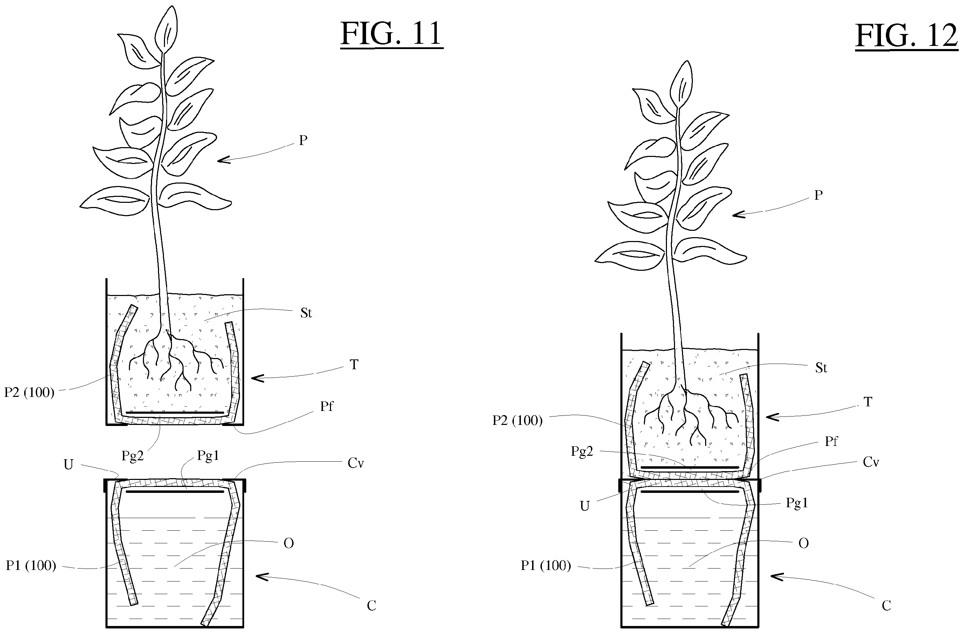

Sur la Fig. 11, la mèche 100 est constituée de deux parties distinctes de mèches P1 et P2 destinées à être mises en contact mutuellement pour activer le fonctionnement de la mèche. Une partie, par exemple P1, trempe dans de l'eau O contenue dans un récipient C. L'autre partie est enfouie dans le substrat St contenu dans un pot T et dans lequel une plante P est présente. La partie P1 présente en vue de face et dans sa position d'utilisation, une géométrie en U retourné, alors que la partie P2 présente en vue de face et dans sa position d'utilisation, une géométrie en U.

Le couvercle Cv du récipient C est traversé d'un passage Pg1 qui s'étend transversalement et horizontalement dans la position d'utilisation dudit récipient et qui débouche d'une part, à l'intérieur du récipient et, d'autre part, au travers dudit couvercle. Le passage Pg1 est formé d'un renfoncement, en forme de tunnel, dans le couvercle Cv et qui débouche latéralement à l'intérieur du couvercle Cv. Dans ce passage Pg1 est disposée la branche intermédiaire de la partie de mèche Pg1 et qui est à découvert vers l'extérieur dudit couvercle, alors que les deux branches d'extrémité de la partie P1 plongent vers le bas dans l'eau O contenue dans le récipient C.

Pareillement, la paroi de fond Pf du pot T est traversée d'un passage Pg2 qui s'étend transversalement et horizontalement dans la position d'utilisation dudit pot et qui débouche d'une part, à l'intérieur du pot T et, d'autre part, au travers de ladite paroi de fond. Le passage Pg2 est formé d'un renfoncement, en forme de tunnel, dans la paroi de fond Pf et qui débouche latéralement à l'intérieur de la paroi de fond Pf.

Dans ce passage Pg2 est disposée la branche intermédiaire de la partie de mèche Pg2 et qui est à découvert vers l'extérieur de ladite paroi de fond, alors que les deux branches d'extrémité de la partie P1 s'étendent vers le haut dans le substrat St contenu dans le pot T.

Le pot T est ainsi physiquement indépendant du récipient C. En déposant le pot T sur le récipient C de sorte à mettre en contact mutuel, permanent et sans pression, les deux branches intermédiaires des deux parties P1 et P2, comme cela apparaît sur la Fig. 12, on active le fonctionnement de la mèche. Il faut noter que les deux parties intermédiaires doivent se toucher sans être pressées mutuellement car les pressions de la force capillaire sont extrêmement faibles, pour obtenir un bon fonctionnement de la mèche 100. Le décalage de la position des deux renfoncements est calculé en conséquence.

L'utilisation de la mèche 100 d'irrigation de l'invention ne requiert aucune source d'énergie.

La mèche d'irrigation est en mesure d'apporter de l'eau aux plantes, en évitant les zones de saturation en eau, source d'asphyxie des racines.

Les débits demeurent stables au fil du temps, mesures réalisées au terme d'un délai de 6 mois.

L'apport permanent de petites quantités d'eau aux racines des plantes offre le meilleur ratio : croissance/apport en eau.

Elle est en mesure d'irriguer le substrat, la terre, sur une hauteur, une longueur, relativement importante et afin d'optimiser l'hydratation.

Lorsqu'elle est utilisée pour transporter de l'eau du bas vers le haut, c'est la plante qui régule ses besoins en eau.

Ses capacités de transfert d'eau sont relativement importantes au regard de sa section.

Ses performances demeurent stables dans le temps.

La structure homogène de la mèche permet au textile d'être donneur d'eau sur toute sa surface.

Associée à un conteneur 200 ou 200', ou à un récipient C, elle évite la nécessité d'un arrosage régulier et fréquent.

## Revendications

1. Mèche d'irrigation (100) destinée à être interposée entre un volume de liquide contenant essentiellement de l'eau (O) et le réseau racinaire d'une plante (P) pour l'irriguer, **caractérisée en ce qu'**elle comprend une bande de matière (Bm) fabriquée en microfibres à partir d'un mélange de microfibres textiles comprenant du polyester et du polyamide.

2. Mèche d'irrigation (100) selon la revendication 1, **caractérisée en ce que** les micro fibres comprennent du polyester dans une proportion en masse d'au moins 80 % et du polyamide dans une proportion en masse d'au moins 9 %.

3. Mèche d'irrigation (100) selon la revendication 1 ou 2, **caractérisée en ce que** la densité de la bande de matière (Bm) est inférieure ou égale à 250 grammes par litre de microfibres.

4. Mèche d'irrigation (100) selon l'une quelconque des revendications précédentes, **caractérisée en ce que** les microfibres sont lisses ou suédées.

5. Mèche d'irrigation (100) selon l'une quelconque des revendications précédentes, **caractérisée en ce qu'**elle est entourée d'un manchon (Mn) fabriqué dans un matériau étanche.

6. Mèche d'irrigation (100) selon l'une quelconque des revendications précédentes, **caractérisée en ce qu'**elle est constituée d'une première partie de mèche (P1) et d'une seconde partie de mèche (P2) physiquement distinctes et destinées à être mise en contact mutuellement pour activer le fonctionnement de la mèche (100).

7. Ensemble comprenant une mèche d'irrigation (100) selon l'une quelconque des revendications précédentes et un moyen de mise en place (Mt) de la mèche (100) dans un pot (T) contenant un substrat (St) dans lequel sont présentes les racines de la plante, **caractérisé en ce que** le moyen de mise en place (Mt) inclut une tige longiligne relativement rigide et formant une aiguille de plusieurs décimètres de long.

8. Ensemble selon la revendication 7, **caractérisé en ce qu'**une extrémité de l'aiguille (Mt) porte un moyen de jonction conçu pour fixer une extrémité de la mèche d'irrigation (100).

9. Ensemble selon la revendication 8, **caractérisé en ce que** ladite extrémité de l'aiguille (Mt) est conformée en boucle ouverte.

10. Ensemble selon l'une quelconque des revendications 7 à 9, **caractérisé en ce qu'**il est associé à un conteneur (200, 200') ou un récipient (C) incluant un volume de stockage pour un liquide.

11. Ensemble selon la revendication 10, **caractérisé en ce que** le conteneur (200) est défini par une paroi de fond (Pf), une ouverture (U) tournée à l'opposé de la paroi de fond (Pf) et **en ce que** ledit conteneur comprend un couvercle (Cv) dimensionné pour fermer ladite ouverture, le couvercle (Cv) étant traversé d'un orifice (R) dimensionné pour faire passer la mèche d'irrigation (100).

12. Ensemble selon la revendication 10, **caractérisé en ce que** le conteneur (200') est défini par une paroi de fond (Pf), une ouverture de remplissage (U) tournée à l'opposé de la paroi de fond (Pf) et dimensionnée également pour réceptionner un pot (T) et **en ce que** la hauteur dudit conteneur est supérieure à celle d'un pot (T) qui est censé accueillir.

13. Ensemble selon la revendication 10, **caractérisé en ce que** le récipient (C) est défini par une paroi de fond (Pf), une ouverture de remplissage (U, F), une paroi de pourtour (Pt), un passage (Ps) traversant la paroi de pourtour (Pt) et dans la partie haute de celle-ci en considérant la position d'utilisation dudit récipient.

14. Réseau d'irrigation destiné à alimenter en eau au moins un conteneur (200, 200'), un récipient (C) selon l'une quelconque des revendications 10 à 13, **caractérisé en ce qu'**il comprend une nourrice (N) dimensionnée pour contenir un volume relativement important d'eau, au moins une réserve intermédiaire (Ri) équipée d'un dispositif de contrôle (Dc) du niveau d'eau dans celle-ci et raccordée, d'une part, à ladite nourrice et, d'autre part, audit conteneur (200, 200') et/ou audit récipient (C).

15. Procédé de fabrication d'une mèche d'irrigation (100) destinée à être interposée entre un volume de liquide contenant essentiellement de l'eau (O) et le réseau racinaire d'une plante (P) pour l'irriguer, **caractérisé en ce qu'**il consiste à sélectionner des microfibres à partir d'un mélange de microfibres textiles comprenant des microfibres de polyester et des microfibres de polyamide et de les arranger pour fabriquer une bande de matière (Bm) constituant la mèche d'irrigation.
